# EUROPEAN PATENT SPECIFICATION

(11) **EP 2 881 660 B1**
(45) Date of publication and mention of the grant of the patent: **13.11.2019**
(21) Application number: 13196148.4
(22) Date of filing: 09.12.2013
(51) Int. Cl.: F22B 37/32, B01D 45/16

(54) **Centrifugal separator of fluid and vapour with a household apparatus**
Zentrifugalabscheider für Flüssigkeit und Wasserdampf bei einem Haushaltsgerät
Séparateur centrifuge de fluide et de vapeur d'un appareil ménager

(43) Date of publication of application: 10.06.2015
(73) Proprietor: Gorenje d.d., 3503 Velenje (SI)
(72) Inventor: Es, Matja, 3320 Velenje (SI); Felle, Bojan, 2380 Slovenj Gradec (SI); Podorsek, Matja, 3327 Martno Ob Paki (SI); Rudolf, Mitja, 3320 Velenje (SI); Kotnik, Sebastjan, 3331 Nazarje (SI)
(74) Representative: Ivancic, Bojan

(56) References cited:
- JP-A- 2002 119 815
- JP-A- 2008 298 309
- KR-B1- 100 741 679
- US-A- 3 349 548
- US-A1- 2001 018 897
- US-A1- 2012 227 405
- US-B1- 6 336 429

## Description

The present invention refers to a household apparatus such as a steam oven, laundry dryer, distillation apparatus, steam iron, steam cleaner and similar, comprising a steam generator and a separator of liquid and steam.

Steam is fed into the area of a household apparatus, such as a steam oven, intended to bake and/or to steam food, said steam effects the food to be treated in a manner that all the nutritional substances, vitamins, juiciness, colours and flavours are preserved. Feeding the steam also means feeding the energy needed for the heat treatment of the food. Said steam is generated by a steam generator being heated by a heating element, however, the steam production is very intense due to intensive heating and, respectively, high heat flux which eventually results in originating of the wet steam. However, the liquid phase is not desired in the oven since it lowers the effect of the cooking process therefore, it is provided that said liquid is separated in a centrifugal separator from the wet steam and is returned into the steam generating process while the dry steam being forwarded into the oven where it is used to treat the food.

Centrifugal separators in general have been disclosed in JP 2008 298309 A, JP 2002 119815 A, KR 100 741 679 B1, US 2001/018897 A1, US 6 336 429 B1, US 2012/227405 A1, US 3 349 548 A. Nevertheless, all the disclosed solutions refer more or less to the filed of industrial centrifugal separators with no specific teachings regarding the household apparatuses.

Know solutions comprise a centrifugal separator having a vertical tube of a greater diameter into which another tube of the smaller diameter is directed horizontally. Said tube of the small diameter can be connected in a thread-like manner with additional baffles. Said vertical tube of a greater diameter is formed at the top thereof with additional tube of the smaller diameter thus, preventing mutual mixing of the liquid and the steam mixture entering tangentially, and the dry steam exiting vertically upwards. In order to achieve said effect said centrifugal separators are formed of plurality of intricate parts and, thus, cost ineffective.

It is the object of the present invention to create a centrifugal separator of fluid and vapour with the household apparatus which remedies drawbacks of known solutions.

The object as set above is solved by characteristics disclosed in claim 1. Details of the invention are disclosed in sub-claims.

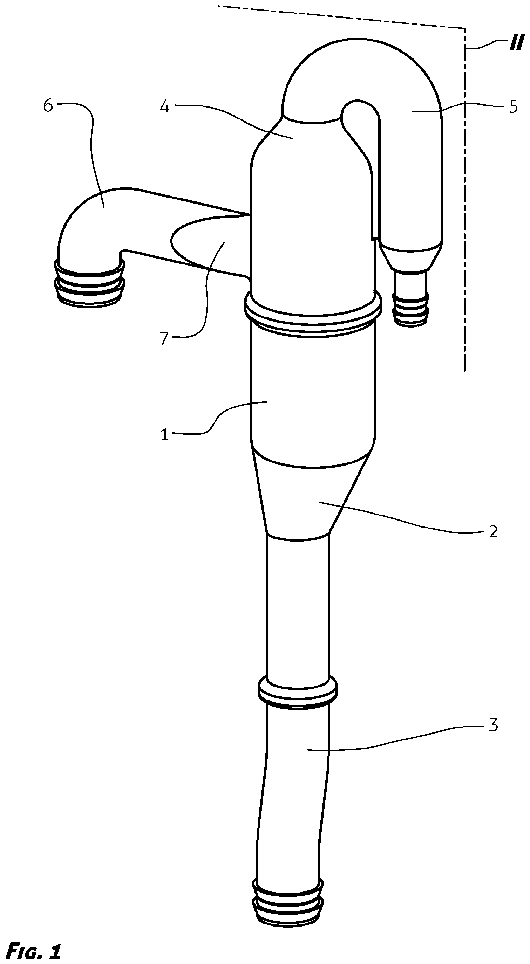

The invention is further described in detail by way of non-limiting preferred embodiment, and with a reference to the accompanying drawings, where
- Fig. 1: shows a three dimensional view of a centrifugal separator of liquid and steam according to the invention,
- Fig. 2: shows a cross-sectional view of a centrifugal separator of Fig. 1 in a vertical plane **II,**
- Fig. 3: shows a cross-sectional view of a centrifugal separator of Fig. 2 along the line **III-III,**

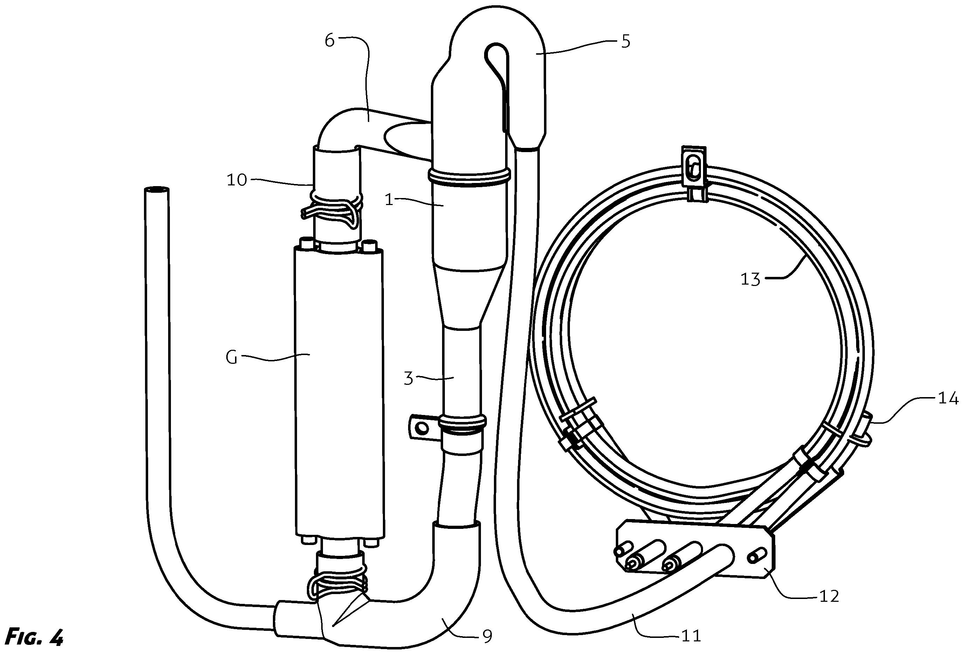

- Fig. 4: shows a three dimensional view of a centrifugal separator of liquid and steam connected with an oven.

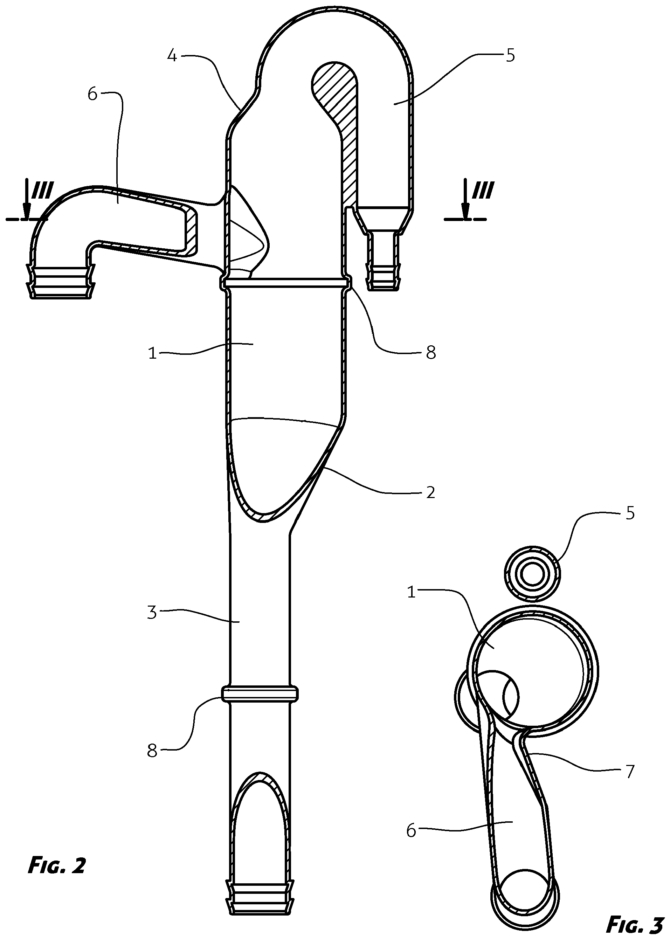

A centrifugal separator of liquid and steam from the media flowing from a steam generator is described in the foregoing on the basis of an embodiment for the use with a household steam oven. The centrifugal separator is formed of a central cylindrical section 1 which at the first end thereof, the bottom end in the present case, changes over via a reducing section 2 into a discharge section 3 of the liquid, water in the present case, and which at the opposite end thereof, the top end in the present case, changes over via a reducing section 4 into a discharge section 5 of the steam. In the area under said reducing section 4 an inlet pipe 6 is attached to said central cylindrical section 1 through which a mixture of liquid and steam to be separated is directed from a steam generator G into said section 1. When observing in a cross sectional view of said section 1 (see Fig. 3), said inlet pipe 6 is attached tangentially to said section 1 and, with regard to the longitudinal axis of the section 1, slanted under an angle (see Fig. 2) in the direction toward said reducing section 2 and said liquid discharge section 3, respectively. In this manner, the mixture of the liquid and the steam is directed downwardly resulting in a significant improvement of the liquid separation from said mixture. The inlet pipe 6 is formed at the location of the attachment thereof to the section 1 and at the side of the section 1 being opposite to the tangentially side with a conical reduction 7 which enables for the said mixture of the liquid and the steam to be effectively directed into the wall of said section 1. Additional advantage of such a construction is represented by increasing velocity of said mixture resulting in increased centrifugal force on the wall of said section 1. Yet another result thereof reflects in an increased back-pressure in the direction towards said steam generator G causing the boiling of liquid to calm down and the heat withdrawal on walls to increase.

The centrifugal separator of liquid and steam from media according to the invention is produced of one piece, for example by means of a blow moulding of plastics, casting of metals and similar. In order for the said separator to be as light as possible it is made with thin walls. To reinforce said thin pipes and walls said separator is formed at least in the area of said section 1 with a reinforcing rib 8 which not only improves transfer of the vertical loads but also facilitates attachment of the separator to the household apparatus.

Said reducing section 2 being provided at the lower end of said cylindrical section 1 is preferably formed as an eccentric reducing section. By means of said eccentricity the adaptation of the separator to the wall of the household apparatus such as the oven significantly increases and facilitates the attachment of said separator.

The centrifugal separator of liquid and steam from media according to the invention shows excellent characteristics also during decalcination of the steam generator G and the separator. A decalcination means is poured in via the mouth of the inlet pipe 6 at the location of the connection to said section 1, thus, ensuring that the entire group steam generator G - separator where the scale originates is submerged in the decalcination means. During decalcination gas bubbles occur that grow in the steam generator G and rise causing simultaneously decalcination means to rise as well. In the area of said reducing section 4 said bubbles start to separate from the solution wherefore the ratio of the number of bubbles and the solution in the decalcination means decreases resulting in lowering the level of the decalcination means. Due to two-sided connection of the steam generator G and the centrifugal separator and the occurrence of the bubbles grow in the area of the steam generator G, and due to the separation of bubbles in the area of the separator a the decalcination means starts to move by means of a natural circulation wherefore the use of a pump or additional heating of media becomes superfluous.

Each free end of the liquid discharge section 3 and the inlet pipe 6 of the centrifugal separator according to the invention is conveniently formed to accept flexible tubular elements 9, 10 which mutually connect the steam generator G and the centrifugal separator according to the invention. Said flexible tubular elements, silicon tubular elements for instance, which are only inserted onto said free ends and secured against unwanted release additionally compensate production defects, seal, damp the vibrations and provide heat insulation. The flexible tubular element being attached to the lower part of the separator is also intended to supply fresh water and to discharge the remaining water after the end of a steam cycle.

A flexible tubular element 11 is attached to the free end of the steam discharge section 5 which is only inserted onto said free end and secured against unwanted release, and which conducts the steam to the area of entering the oven and, respectively, to the receiving projection on a flange 12 of a circular formed heater 13. A discharge pipe 14 starts at said receiving projection and extends further on close to said heater 13 delivering steam into the oven tangentially to a fan, not shown, and in the direction of rotating thereof, said fan being placed inside said circular heater 13. Said tangentially inlet of the steam considerably enhance mixing of the steam in the oven. The free end of said discharge pipe 14 is optionally provided with a nozzle.

While the foregoing written description enables one of ordinary skill to make and use what is considered presently to be the best mode thereof, those of ordinary skill will understand and appreciate the existence of variations, combinations, and equivalents of the specific exemplary embodiments and methods herein. The invention should therefore not be limited by the above described embodiments and methods, but by all embodiments and methods within the scope of the invention as claimed.

## Claims

1. Arrangement comprising a centrifugal separator of liquid and steam and a household apparatus such as a steam oven, laundry dryer, distillation apparatus, steam iron, steam cleaner and similar, comprising a steam generator (G), ***characterized in that*** the centrifugal separator is formed as a single piece separator comprising a central cylindrical section (1) which at the first end thereof, the bottom end that is, changes over via an eccentric reducing section (2) into a liquid discharge section (3), and which at the opposite end thereof, the top end that is, changes over via a reducing section (4) into a steam discharge section (5) of the steam, wherein in the area under said reducing section (4) an inlet pipe (6) is attached to said central cylindrical section (1) through which a mixture of liquid and steam to be separated is directed from the steam generator (G) into said section (1), wherein said inlet pipe (6) is attached tangentially to said section (1) and, with regard to the longitudinal axis of the section (1), slanted under an angle in the direction toward said eccentric reducing section (2) and said liquid discharge section (3), respectively, and wherein the inlet pipe (6) is formed with a conical reduction (7) at the location of the attachment of the inlet pipe (6) to the section (1) and on the side of the section (1) which is opposite to the tangential side to enable for the said mixture of the liquid and the steam to be directed into the wall of said section (1).

2. Arrangement according to claim 1, ***characterized in that*** the centrifugal separator is produced of one piece, for example by means of a blow moulding of plastics or casting of metals.

3. Arrangement according to any of the preceding claims, ***characterized in that*** the centrifugal separator is formed in the area of at least said section (1) with at least one reinforcing rib (8).

4. Arrangement according to any of the preceding claims, **characterized in that** each free end of the liquid discharge section (3), the steam discharge section (5) and the inlet pipe (6) is connected to a flexible tubular element (9, 10, 11).

5. Arrangement according to claim 4, ***characterized in that*** said flexible tubular element (9, 10) is formed as a silicon tubular element.

6. Arrangement according to any of claims 4 and 5, ***characterized in that*** said flexible tubular element (11) is attached to the free end of the steam discharge section (5) extending to the area of entering the household apparatus and, respectively, to a receiving projection on a flange (12) of a circular formed heater (13), wherein a discharge pipe (14) starts at said receiving projection and extends further on close to said heater (13) delivering steam into the household apparatus tangentially to a fan being placed inside said circular heater (13).

7. Arrangement according to claim 6, ***characterized in that*** said free end of said discharge pipe (14) is optionally provided with a nozzle.

## Patentansprüche

1. Anordnung, welche einen Zentrifugalabscheider für Flüssigkeit und Dampf sowie ein einen Dampferzeuger (G) umfassendes Haushaltsgerät, wie beispielsweise einen Dampfgarer, Wäschetrockner, Destillierapparat, Dampfbügeleisen, Dampfreiniger und dergleichen, umfasst, ***dadurch gekennzeichnet, dass*** der Zentrifugalabscheider als ein einteiliger Abscheider ausgebildet ist, der einen zentralen zylindrischen Abschnitt (1) umfasst, wobei dessen erstes Ende, das das untere Ende ist, über einen sich exzentrisch verkleinernden Abschnitt (2) in einen Flüssigkeitsablaufabschnitt (3) übergeht, und wobei das gegenüberliegende Ende davon, welches das obere Ende ist, über einen Verringerungsabschnitt (4) in einen Dampfabgabeabschnitt (5) für den Dampf übergeht, wobei in dem Bereich unter dem Verringerungsabschnitt (4) ein Einlassrohr (6) an dem zentralen zylindrischen Abschnitt (1) angebracht ist, durch welches eine zu trennende Mischung aus einer Flüssigkeit und Dampf von einem Dampferzeuger (G) in diesen Abschnitt (1) eingeleitet wird, wobei das Einlassrohr (6) tangential an diesem Abschnitt (1) angebracht ist und in Bezug auf die Längsachse des Abschnitts (1) mit einer Neigung jeweils in Richtung des sich exzentrisch verkleinernden Abschnitts (2) und des Flüssigkeitsablaufabschnitts (3) schräggestellt ist, und wobei das Einlassrohr (6) mit einer konischen Reduzierung (7) an der Stelle, an der das Einlassrohr (6) an dem Abschnitt (1) angebracht ist, und an der Seite des Abschnitts (1), welche der tangentialen Seite gegenüberliegt, ausgebildet ist, um zu ermöglichen, dass die Mischung aus der Flüssigkeit und dem Dampf in die Wand des Abschnitts (1) eingeführt wird.

2. Anordnung nach Anspruch 1, ***dadurch gekennzeichnet, dass*** der Zentrifugalabscheider in einem Stück gefertigt ist, beispielsweise mittels Blasformen von Kunststoffen oder Gießen von Metallen.

3. Anordnung nach einem der vorhergehenden Ansprüche, ***dadurch gekennzeichnet, dass*** der Zentrifugalabscheider in dem Bereich von wenigstens dem Abschnitt (1) mit wenigstens einer Verstärkungsrippe (8) ausgebildet ist.

4. Anordnung nach einem der vorhergehenden Ansprüche, ***dadurch gekennzeichnet, dass*** das freie Ende des Flüssigkeitsablaufabschnitts (3), des Dampfabgabeabschnitts (5) und des Einlassrohrs (6) jeweils mit einem flexiblen rohrförmigen Element (9, 10, 11) verbunden ist.

5. Anordnung nach Anspruch 4, ***dadurch gekennzeichnet, dass*** das flexible rohrförmige Element (9, 10) als ein rohrförmiges Silikonelement ausgebildet ist.

6. Anordnung nach Anspruch 4 oder 5, ***dadurch gekennzeichnet, dass*** das flexible rohrförmige Element (11) an dem freien Ende des Dampfabgabeabschnitts (5) angebracht ist und sich zu einem Bereich zum Eintreten in das Haushaltsgerät und entsprechend zu einem Aufnahmevorsprung an einem Flansch (12) einer kreisförmig ausgebildeten Heizung (13) erstreckt, wobei ein Ableitungsrohr (14) an dem Aufnahmevorsprung beginnt und sich davon weiter nahe der Heizung (13) erstreckt und Dampf in das Haushaltsgerät tangential zu einem Lüfter abgibt, der im Inneren der kreisförmigen Heizung (13) angeordnet ist.

7. Anordnung nach Anspruch 6, ***dadurch gekennzeichnet, dass*** das freie Ende des Ableitungsrohrs (14) wahlweise mit einer Düse versehen ist.

## Revendications

1. Agencement comprenant un séparateur centrifuge de liquide et de vapeur et un appareil ménager tel qu'un four à vapeur, un sèche-linge, un appareil de distillation, un fer à vapeur, un nettoyeur à vapeur et analogue, comprenant un générateur de vapeur (G), **caractérisé par le fait que** le séparateur centrifuge est réalisé sous la forme d'un séparateur d'un seul tenant comprenant une section cylindrique centrale (1) qui, à la première extrémité de celle-ci, c'est-à-dire l'extrémité inférieure, se transforme, via une section de réduction excentrique (2), en une section d'évacuation de liquide (3) et qui, à l'extrémité opposée de celle-ci, c'est-à-dire l'extrémité supérieure, se transforme, via une section de réduction (4), en une section d'évacuation de vapeur (5) de la vapeur, dans lequel, dans la zone sous ladite section de réduction (4), un tuyau d'entrée (6) est fixé à ladite section cylindrique centrale (1) à travers laquelle un mélange de liquide et de vapeur à séparer est dirigé du générateur de vapeur (G) à ladite section (1), ledit tuyau d'entrée (6) étant fixé de manière tangentielle à ladite section (1) et, par rapport à l'axe longitudinal de la section (1), incliné à un angle dans la direction allant vers ladite section de réduction excentrique (2) et ladite section d'évacuation de liquide (3), respectivement, et le tuyau d'entrée (6) étant formé avec une réduction conique (7) à l'emplacement de la fixation du tuyau d'entrée (6) à la section (1) et sur le côté de la section (1) qui est opposé au côté tangentiel pour permettre audit mélange du liquide et de la vapeur d'être dirigé dans la paroi de ladite section (1).

2. Agencement selon la revendication 1, **caractérisé par le fait que** le séparateur centrifuge est produit d'une seule pièce, par exemple au moyen d'un moulage par soufflage de matière plastique ou d'une coulée de métaux.

3. Agencement selon l'une quelconque des revendications précédentes, **caractérisé par le fait que** le séparateur centrifuge est formé dans la zone au moins de ladite section (1) avec au moins une nervure de renforcement (8).

4. Agencement selon l'une quelconque des revendications précédentes, **caractérisé par le fait que** chaque extrémité libre de la section d'évacuation de liquide (3), de la section d'évacuation de vapeur (5) et du tuyau d'entrée (6) est reliée à un élément tubulaire souple (9, 10, 11).

5. Agencement selon la revendication 4, **caractérisé par le fait que** ledit élément tubulaire souple (9, 10) est réalisé sous la forme d'un élément tubulaire en silicone.

6. Agencement selon l'une quelconque des revendications 4 et 5, **caractérisé par le fait que** ledit élément tubulaire souple (11) est fixé à l'extrémité libre de la section d'évacuation de vapeur (5) s'étendant jusqu'à la zone d'entrée de l'appareil ménager et, respectivement, jusqu'à une saillie de réception sur une bride (12) d'un élément chauffant de forme circulaire (13), un tuyau d'évacuation (14) commençant à ladite saillie de réception et s'étendant plus loin à proximité dudit élément chauffant (13) distribuant de la vapeur dans l'appareil ménager de manière tangentielle à un ventilateur placé à l'intérieur dudit élément chauffant circulaire (13).

7. Agencement selon la revendication 6, **caractérisé par le fait que** ladite extrémité libre dudit tuyau d'évacuation (14) comporte facultativement une buse.
